# EUROPEAN PATENT SPECIFICATION

(11) **EP 0 806 341 B1**
(45) Date of publication and mention of the grant of the patent: **21.01.2004**
(21) Application number: 97302811.1
(22) Date of filing: 24.04.1997
(51) Int. Cl.: B64B 1/00, B64C 31/028, B64C 3/46

(54) **Aircraft**
Flugzeug
Aéronef

(30) Priority: 06.05.1996 US 642984
(43) Date of publication of application: 12.11.1997
(73) Proprietor: Hayashi, Masahiko, Tokyo (JP)
(72) Inventor: Hayashi, Masahiko, Tokyo (JP)
(74) Representative: Godwin, Edgar James

(56) References cited:
- CN-A- 1 063 083
- FR-A- 615 205
- GB-A- 2 275 036
- US-A- 3 198 458
- US-A- 3 212 730
- US-A- 3 443 776
- US-A- 3 473 761
- US-A- 4 105 173

## Description

The present invention relates to aircraft, such as hot air balloons, with an envelope which is folded at the time of nonuse and can be put away.

Usually, the envelope of a hot air balloon has a durable outer surface and a highly airtight and/or heatproof inner skin.

The conventional envelope requires a lot of trouble and time to inflate. Moreover, it has been difficult to improve resistance against wind and flight performance because of flexible quality and lack of stiffness (rigidity).

It would be desirable to be able to provide an envelope which is able to be folded and put away at the time of nonuse as before.

The present invention provide an aircraft as set forth in claim 1.

The preferred features of the present invention will be understood by reading carefully the following description in conjunction with the accompanying drawings.

The drawings are illustrative and are not to be limitative of the scope of the present invention.

In the drawings:
Fig. 1 is a front view showing a first embodiment of the present invention;
Fig. 2 is a side view showing the first embodiment of the present invention;
Fig. 3 is an expanded sectional view taken on line 3-3 of Fig. 1;
Fig. 4 is an expanded sectional view taken on line 4-4 of Fig. 1;
Fig. 5 is a diagram showing the condition to supply the air of the first embodiment of the present invention;
Fig. 6 is a front view showing the second embodiment of the present invention;
Fig. 7 is a top view showing the second embodiment of the present Invention;
Fig. 8 is a front view showing a third embodiment of the present invention;
Fig. 9 is a top view showing the third embodiment of the present invention;
Fig. 10 is a perspective view showing a fourth embodiment of the present invention; and
Fig. 11 is a typical sectional view showing of the fourth embodiment of the present invention.

Preferred embodiments of the present invention will be described in more detail referring to the accompanying drawings.

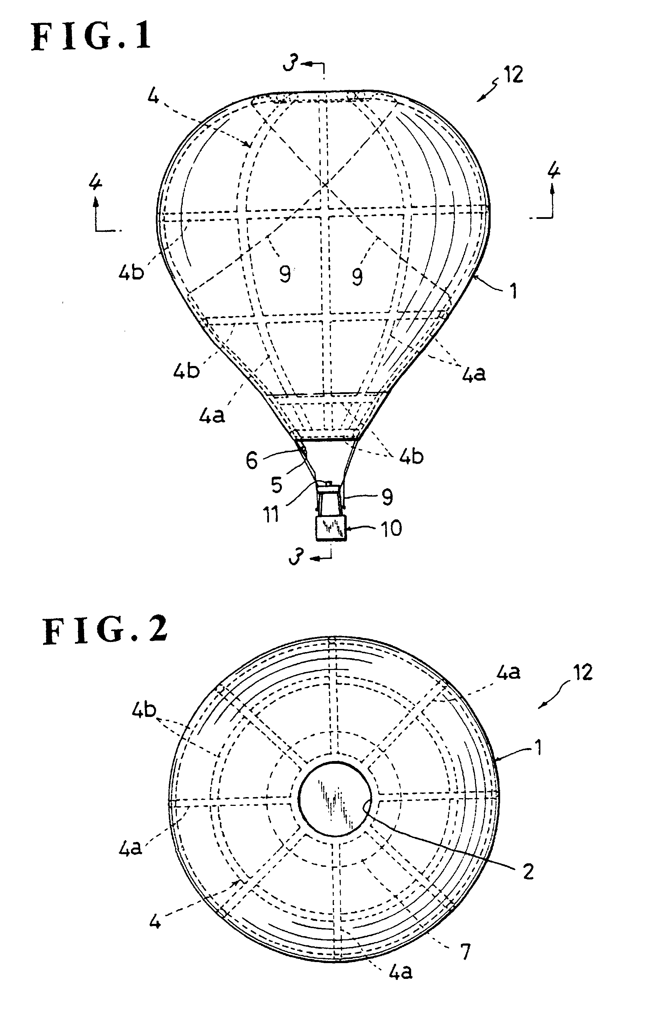

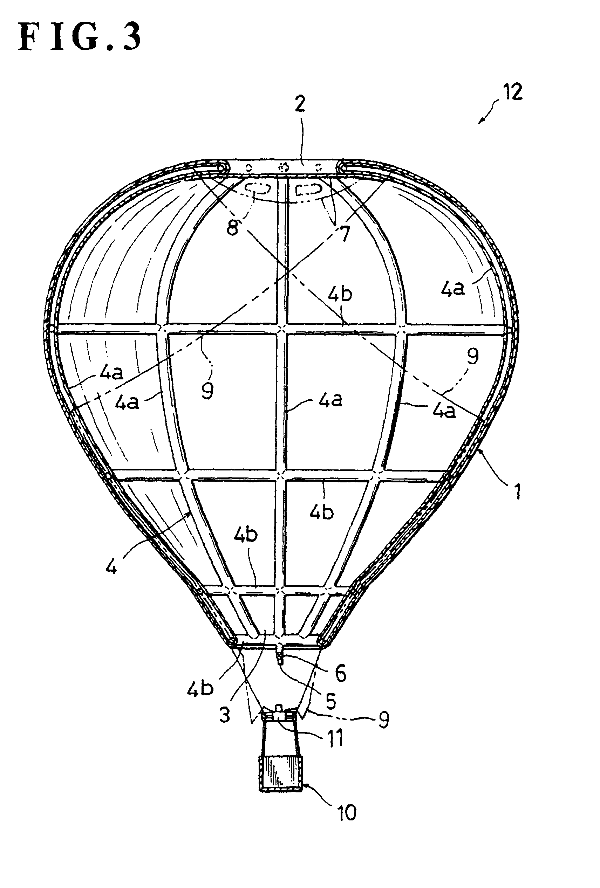

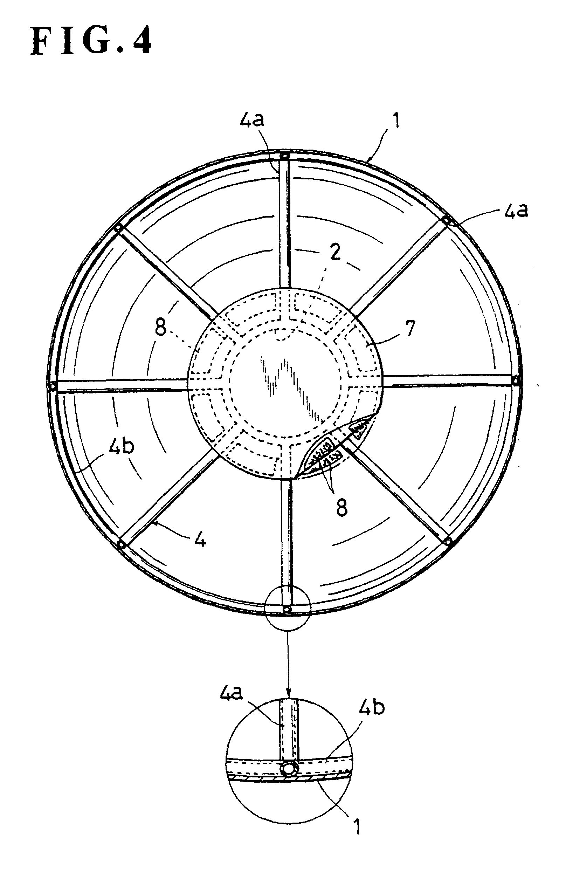

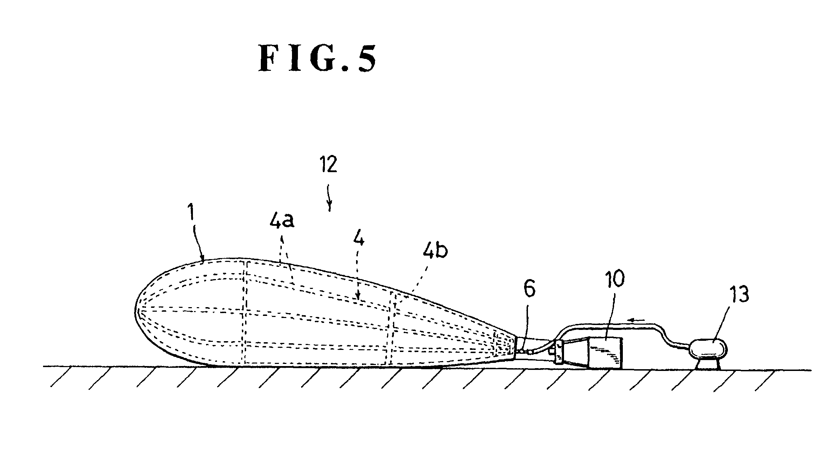

Figs. 1 to 5 illustrate a first embodiment of the present invention; an envelope 1 is formed in the same shape as the envelope of a hot air balloon. A release valve 2 for releasing hot air (including combustion products) is formed in the upper part of the envelope 1, and a mouth 3 for introducing hot air is formed at the lower part of the envelope 1. The envelope 1 is made of suitable material such as nylon and tetoron cloths with resinous coating by reason of the improving of airtightness and the prevention of debasement.

Flexible gas storage tubing 4 formed with the envelope 1 is a frame that maintains the inflated condition of the envelope 1 and comprises several vertical gas storage tubes 4a arranged equally in a vertical manner all around the envelope 1, several horizontal gas storage tubes 4b formed at fixed space with the shape of a ring in a horizontal way around the envelope 1 and connected with the vertical gas storage tubes 4a, and an opening and shutting valve 6 provided with a gas injection port 5 formed into the lowest part of the horizontal gas storage tube 4b as the apparatus to support and supply the vertical and horizontal gas storage tubes 4a and 4b with gas like air, helium, and hydrogen. In addition, the horizontal gas storage tubes 4b are arranged at slight measuring intervals in the part of the mouth 3 so as to be able to maintain an opening mouth 3.

A parachute vent 7 is provided with a face fastener 8 which covers the release valve 2 that is possible to open and shut. Also a valve line 9 for the operation, which projectsfrom the mouth 3 of the envelope 1, is provided in the parachute vent 7.

A gondola 10 Is provided under the envelope 1 by suspension system. And a burner 11 to send hot air through the mouth 3 into the envelope 1 is provided within the gondola 10.

When an aircraft 12 of above-mentioned composition becomes in a condition in which the envelope 1 has swelled by the envelope is expanded and gas is supplied within the horizontal gas storage tube 4b and vertical gas storage tube 4a using air pump 13 from gas injection port 5, and these gas storage tubes 4 inflate, then the gas injection port 5 is closed by shutting valve 6.

Secondly, the envelope 1 is made to rise with the same operation as before, and it is able to fly.

At the time of nonuse, envelope 1 folds as before and can be put away.

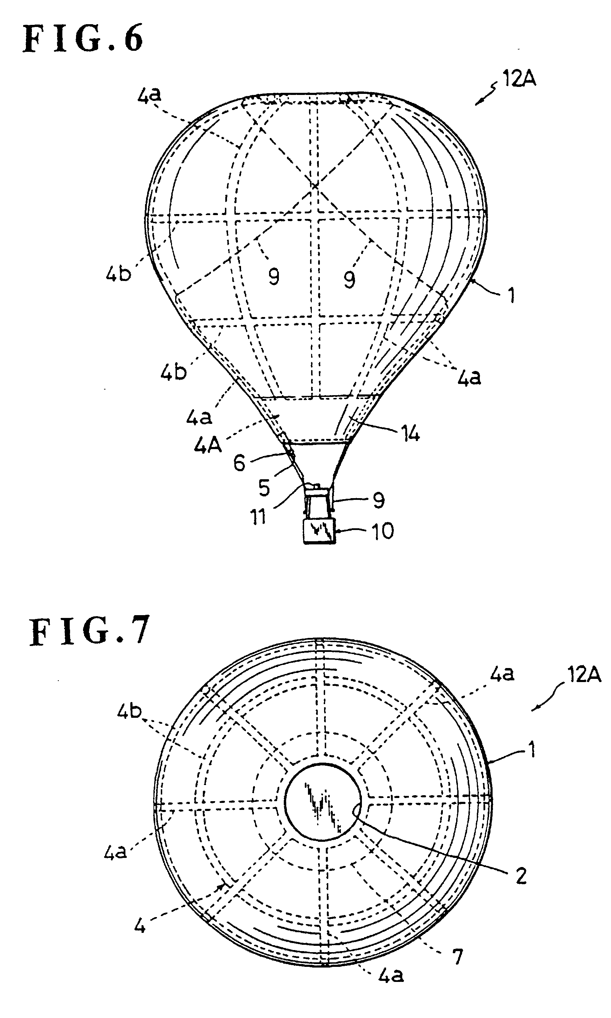

Other embodiments of the present invention will now be described referring to Figs. 6 to Through the drawings of the embodiments, like components are denoted by like numerals as of the first embodiment and will be explained in no more details.

Figs. 6 to 7 show a second embodiment of the present invention, which is distinguished from the first embodiment by the fact that a skirt part 14 is arranged with gas storage tubing in the form of flat tubes 4A formed of the part of the mouth 3 of the envelope 1. An aircraft 12A with the skirt part 14 according to the second embodiment will provide the same effects as of the first embodiment.

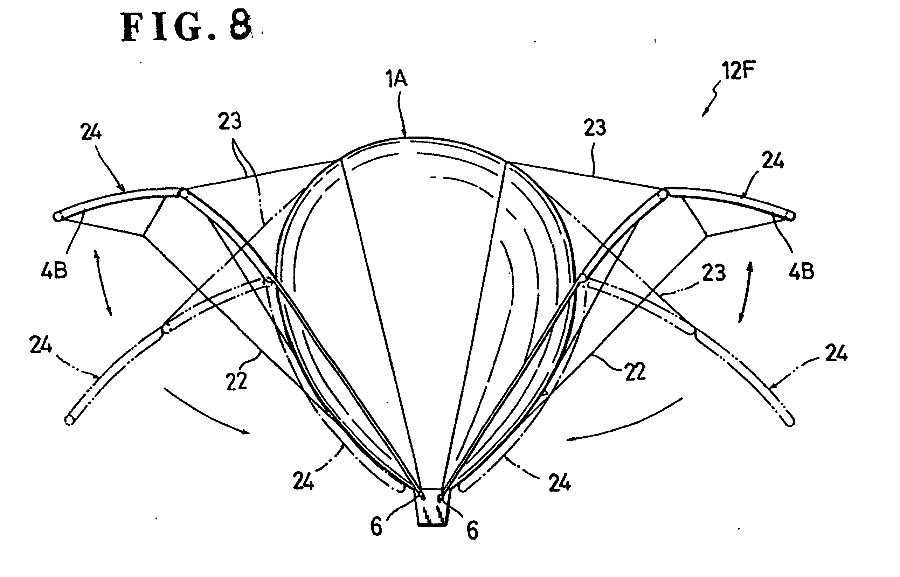

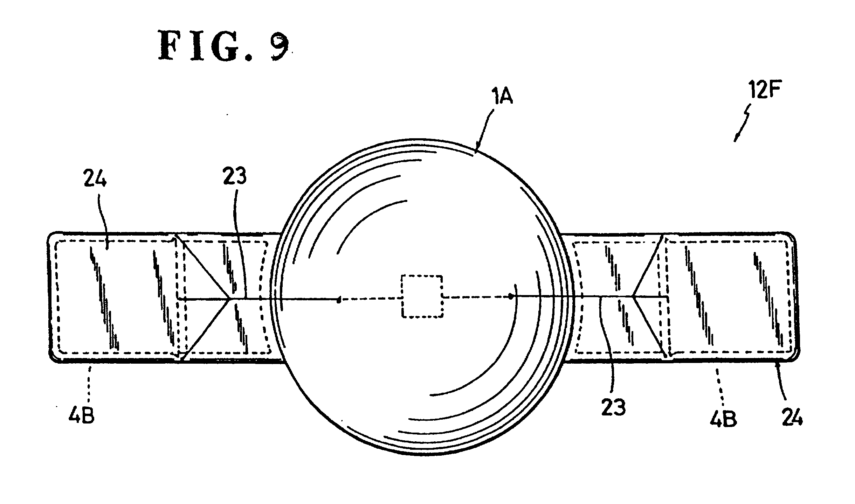

Figs. 8 and 9 show a third embodiment of the present invention which is distinguished from the first embodiment by the fact that flying wings 24, 24 able to flutter with a holding rope 22 and a pulling rope 23, and maintaining the condition that an air storage tube 4B is expanding, are provided to the envelope 1A. An aircraft 12F with the flying wing 24 arranged to the envelope 1A according to third embodiment will provide the same effects as of the first embodiment.

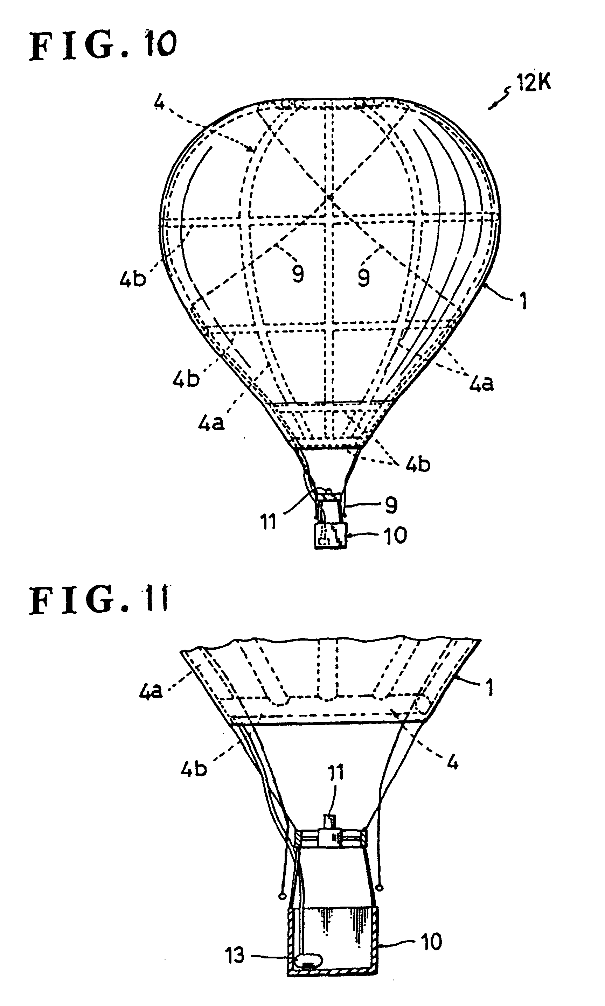

Figs. 10 to 11 show a fourth embodiment of the present invention which is distinguished from the first embodiment by the fact that an air pump 13 is connected with the lowest part of the horizontal gas storage tube 4b as the equipment to maintain and supply gas including air. An aircraft 12K with the air pump 13 according to the twelfth embodiment will provide the same effects as of the first embodiment.

Since an aircraft comprises an envelope which may be folded and stored away at the time of nonuse for an air balloon, a flexible gas storage tube which is formed of the envelope and which may be maintain the condition that the envelope is inflated, and an equipment which maintains and supplies gas like air, helium, and hydrogen into the flexible gas storage tube, may keep the inflated condition in order to inflate and supply gas into the flexible gas storage tube.

Therefore, inflating the envelope can be performed comfortably and easily.

It can be put away as before and is put away in a compact form by expelling gas within the gas storage tube.

Though the structure is light, rigidity which is important can be given, and resistance against wind and flight performance are improved greatly.

Since the structure is simple, it is possible to manufacture it easily. Also a mouth part is opened by a gas storage tube certainly, and it can be used safety with a burner for hot air balloons.

## Claims

1. An aircraft comprising an envelope (1) for containing hot air to provide buoyancy, the envelope (1) having a mouth (3) at the bottom, through which hot air is to be supplied to the interior of the envelope during use of the aircraft, the envelope (1) being foldable when the aircraft is not in use, **characterized in that** the envelope (1) includes flexible tubing (4) which can be supplied with gas to assist in unfolding the envelope (1), the flexible tubing (4) having means for supplying gas to the flexible tubing and maintaining the flexible tubing in an inflated condition so as to hold the mouth (3) open.

2. An aircraft as claimed in claim 1, wherein the flexible tubing (4) comprises:
a first flexible tube structure (4a, 4b) for maintaining an unfolded condition of the envelope; and
a second flexible gas storage tube structure (4b; 4A), formed at the mouth (3) of the envelope and connected with the first flexible tube structure, for holding the mouth open.

3. An aircraft as claimed in claim 1 or 2, wherein the gas supplying and maintaining means comprises a gas injection port (5) and a valve (6) communicating the port (5) with the flexible tubing (4).

4. An aircraft as claimed in claim 1 or 2, wherein the gas supplying and maintaining means comprises an air pump (13) connected with the flexible tubing (4).

## Patentansprüche

1. Luftfahrzeug, das eine Hülle (1) zum Aufnahmen von Heißluft umfaBt, um einen Auftrieb bereitzustellen, wobei die Hülle (1) am Unterteil eine Mündung (3) hat, durch die dem Innern der Hülle während der Benutzung des Luftfahrzeugs Heißluft zugeführt werden soll, wobei die Hülle (1) gefaltet werden kann, wenn das Luftfahrzeug nicht in Benutzung ist, **dadurch gekennzeichnet, daß** die Hülle (1) ein flexibles Röhrennetz (4) einschließt, das mit Gas versorgt werden kann, um das Entfalten der Hülle (1) zu unterstützen, wobei das flexible Röhrennetz (4) Mittel hat, um dem flexiblen Röhrennetz Gas zuzuführen und das flexible Röhrennetz in einem aufgeblasenen Zustand zu erhalten, um so die Mündung (3) offenzuhalten.

2. Luftfahrzeug nach Anspruch 1, bei dem das flexible Röhrennetz (4) folgendes umfaßt:
eine erste flexible Röhrenstruktur (4a, 4b), um einen entfalteten Zustand der Hülle aufrechtzuerhalten, und
eine zweite flexible Gasspeicher-Röhrenstruktur (4b; 4A), geformt an der Mündung (3) der Hülle und verbunden mit der ersten flexiblen Röhrenstruktur, um die Mündung offenzuhalten.

3. Luftfahrzeug nach Anspruch 1 oder 2, bei dem das Gaszufuhr- und Erhaltungsmittel eine Gasinjektionsöffnung (5) und ein Ventil (6) umfaßt, das die Öffnung (5) mit dem flexiblen Röhrennetz (4) verbindet.

4. Luftfahrzeug nach Anspruch 1 oder 2, bei dem das Gaszufuhr- und Erhaltungsmittel eine mit dem flexiblen Röhrennetz (4) verbundene Luftpumpe (13) umfaßt.

## Revendications

1. Aéronef, comprenant une enveloppe (1) destinée à contenir de l'air chaud pour établir une flottabilité, l'enveloppe (1) comportant une embouchure (3) au niveau de sa partie inférieure, à travers laquelle l'air chaud doit être alimenté vers l'intérieur de l'enveloppe au cours de l'utilisation de l'aéronef l'enveloppe (1) pouvant être pliée lorsque l'aéronef n'est pas utilisé, **caractérisé en ce que** l'enveloppe (1) englobe un tube flexible (4), pouvant être alimenté en gaz pour faciliter le dépliage de l'enveloppe (1), le tube flexible (4) comportant un moyen pour amener le gaz vers le tube flexible et pour maintenir le tube flexible dans un état gonflé de sorte à maintenir l'embouchure (3) ouverte.

2. Aéronef selon la revendication 1, dans lequel le tube flexible (4) comprend:
une première structure, de tube flexible (4a, 4b) pour maintenir un état déplié de l'enveloppe; et
une deuxième structure à emmagasinage de gaz du tuyau flexible (4b; 4A) formée au niveau de l'embouchure (3) de l'enveloppe et connectée à la première structure du tuyau flexible pour maintenir l'embouchure ouverte.

3. Aéronef selon les revendications 1 ou 2, dans lequel le moyen d'alimentation du gaz et de maintien comprend un orifice d'injection de gaz (5) et une soupape (6) établissant une communication entre l'orifice (5) et le tube flexible (4).

4. Aéronef selon les revendications 1 ou 2, dans lequel le moyen d'alimentation du gaz et de maintien comprend une pompe à air (13) connectée au tube flexible (4).
